# FASCICULE DE BREVET EUROPEEN

(11) **EP 2 501 582 B1**
(45) Date de publication et mention de la délivrance du brevet: **13.04.2016**
(21) Numéro de dépôt: 10805438.8
(22) Date de dépôt: 19.11.2010
(51) Int. Cl.: B60K 37/02, B60K 35/00, G02F 1/13, F16J 15/00

(54) **DISPOSITIF D'AFFICHAGE DE TABLEAU DE COMMANDES DE VÉHICULE AUTOMOBILE.**
ANZEIGEVORRICHTUNG FÜR EIN ARMATURENBRETT EINES KRAFTFAHRZEUGS
DISPLAY DEVICE FOR A CONTROL PANEL FOR A MOTOR VEHICLE

(30) Priorité: 20.11.2009 FR 0905589
(43) Date de publication de la demande: 26.09.2012
(73) Titulaire: Valeo Systèmes Thermiques, 78320 Le Mesnil-Saint-Denis (FR)
(72) Inventeur: HUYNH, Tan Duc, F-93330 Neuilly Sur Marne (FR); BERAUD, Henry, F-94300 Vincennes (FR)
(74) Mandataire: Pothmann, Karsten
(86) Numéro de dépôt international: PCT/FR2010/000777
(87) Numéro de publication internationale: WO 2011/061421

(56) Documents cités:
- EP-A1- 1 499 170
- DE-A1-102006 012 147
- DE-C1- 10 106 498
- GB-A- 2 336 019

## Description

La présente invention se rapporte à un dispositif d'affichage de tableau de commandes de véhicule automobile. Plus précisément, la présente invention vise à améliorer l'étanchéité d'un dispositif d'affichage présent sur une façade de tableau de commande d'un véhicule automobile. Elle a essentiellement pour but de sécuriser le fonctionnement de différents équipements contrôlés par un utilisateur depuis le tableau de commandes.

Le domaine de l'invention est, d'une façon générale celui de la protecti on de composants électroniques présents dans le tableau de commandes.

Un véhicule automobile est couramment équipé, au niveau de la planche de bord, d'un ou de plusieurs équipements. Ces équipements sont par exemple : un autoradio, une installation de climatisation de l'air contenu à l'intérieur de l'habitacle du véhicule, ou encore un système de navigation. Les équipements considérés sont le plus souvent des équipements de confort, c'est-à-dire des appareils optionnels qui ne sont pas indispensables à une fonction première et primordiale du véhicule, à savoir son déplacement. Les tableaux de commandes de ces équipements sont souvent équipés de dispositifs d'affichage qui permettent à un utilisateur via un écran spécifique, de prendre connaissance d'informations relatives à l'équipement considéré.

Ainsi, de nombreux équipements actuels comportent des tableaux de commandes comportant un ou plusieurs écrans, notamment des écrans à cristaux liquides (LCD ou « Liquid Crystal Display » en anglais), ou des écrans qui font par exemple appel à une technologie dite TFT, ou « Thin-Film Transistor » en anglais, pour matrices de transistors en film mince. Les tableaux de commandes peuvent également comporter d'autres types d'écran, par exemple des écrans à affichage fluorescent sous vide (VFD ou « Vacuum Fluorescent Display » en anglais).

Un tableau de commande est typiquement composé :
- d'une façade, constituant la partie visible de l'équipement par l'utilisateur;
- d'un écran, inscrit dans la façade, par exemple LCD, permettant d'afficher les informations ;
- d'une boite à lumière comportant par exemple des LEDS ou des lampes et permettant à un écran de type LCD de disposer de suffisamment d'énergie lumineuse pour un affichage satisfaisant des informations ;
- d'un circuit imprimé comportant des composants électroniques; et
- d'une connection zébra ou autre broches ou nappe, permettant le contact électrique entre l'écran et le circuit imprimé.

Les différents éléments qui viennent d'être cités sont emboités afin de maintenir une certaine pression pour que l'écran soit en appui sur la façade du tableau de commandes. La pression exercée par les éléments laisse cependant passer de l'air entre l'écran et la façade du tableau de commandes de l'appareil.

Lorsqu'un utilisateur, chargé d'électricité statique, approche son doigt de la façade d'un appareil, une décharge survient du fait d'une différence de potentiel existant entre le doigt et la façade. En effet, l'air situé entre la façade et l'écran conduit l'électricité statique de l'utilisateur à raison de un kilovolt par millimètre. En été, quand l'air est plus sec, la différence de potentiel peut atteindre vingt cinq kilovolts, et ainsi se décharger sur une distance de vingt cinq millimètres.

Différents systèmes permettant d'attirer l'électricité statique pour protéger les composants électroniques du circuit imprimé existent ; on connait par exemple un système faisant intervenir des plaques de tôles en métal : Les tôles en métal sont placées au-dessus des zones connectées de l'écran. A l'arrivée d'une décharge électrostatique, l'électricité est attirée par la tôle et est directement conduite à la masse. Ce système permet de protéger les composants électroniques, préservant ainsi l'appareil dans son ensemble, et lui conférant une plus longue durée de vie.

L'inconvénient majeur de ce système est que les tôles métalliques ne sont pas réparties entièrement sur le contour de l'appareil ; l'électricité statique est ainsi attirée par les tôles, mais elle peut aussi prendre un autre chemin et endommager les composants électroniques. Une solution serait de placer un cadre en tôle sur la totalité du contour, mais pour des raisons économiques, cette solution n'est pas satisfaisante. De plus, la disposition de la tôle autour de la totalité de l'écran est encombrante. Comme expliqué précédemment, l'électricité statique véhiculée par l'utilisateur est néfaste pour les composants électroniques. Si les composants électroniques du tableau de commandes , ou les connections se situent à une distance inférieure à vingt cinq millimètres de la façade dudit tableau de commande considéré, ce qui est le cas du circuit imprimé et de la connectique reliant l'écran LCD à la carte et pouvant conduire cette forte surtension vers les composants , ils sont alors susceptibles d'être endommagés voire détruits.

Un tableau de commande est connu DE-C-10106 498, par exemple.

Par ailleurs, des produits de nettoyage contiennent des agents chimiques de plus en plus agressifs. Lorsque l'utilisateur nettoie le tableau de commandes de son véhicule, certains agents chimiques pénètrent dans le tableau de commande, entre la façade et l'écran, et endommagent ainsi les connections de l'écran LCD qui sont des pistes métalliques oxydables fines « I.T.O. », les composants électroniques ou les éléments dudit tableau de commandes.

Ainsi, l'absence d'une grande étanchéité entre la façade et l'écran du tableau de commandes est très néfaste notamment pour les composants électroniques présents dans ledit tableau de commandes.

L'objet de la présente invention permet de résoudre les différents problèmes qui viennent d'être mentionnés. Ainsi, dans l'invention, on propose une solution pour assurer une étanchéité viable de dispositifs d'affichage présents sur les tableaux de commandes de véhicule automobile, afin que ni les décharges électrostatiques générées par l'utilisateur, ni les agents chimiques, ne soient susceptibles d'endommager les composants électroniques des équipements d'un véhicule ; à cet effet, dans l'invention, on propose d'ajouter un joint d'étanchéité au niveau de l'écran des tableaux de commandes.
L'invention concerne donc essentiellement un tableau de commande de véhicule automobile comportant une façade dans laquelle est réalisée une ouverture au niveau de laquelle est disposé un écran d'affichage caractérisé en ce qu'un joint est disposé au niveau d'au moins une partie de la périphérie de l'ouverture pour protéger les composants électroniques situés derrière la façade contre l'intrusion de fluides et de décharges électrostatiques.

Outre les caractéristiques principales qui viennent d'être mentionnées dans le paragraphe précédent, le tableau de commandes selon l'invention peut présenter une ou plusieurs caractéristiques supplémentaires parmi les suivantes :
- le joint est disposé sur la totalité de la périphérie de l'ouverture ;
- le joint est collé sur l'écran ;
- le joint est collé sur la périphérie de l'ouverture ;
- le joint est maintenu par une pression exercée sur une face arrière de l'écran ;
- le joint est disposé dans une rainure aménagée au niveau de la périphérie de l'ouverture ;
- le joint (120) est disposé par extrusion dans la rainure aménagée au niveau de la périphérie de l'ouverture (111).
- le joint (120) est disposé par surmoulage au niveau de la périphérie de l'ouverture (111).
- la pression exercée sur le joint est réalisée par des moyens de fixation ;
- l'écran est un écran de type LCD ;
- le joint est réalisé dans un matériau souple,
- le matériau souple est un élastomère en silicone ou une mousse cellulaire en matériau plastique ou caoutchouteux

Les différentes caractéristiques supplémentaires du tableau de commandes selon l'invention, dans la mesure où elles ne s'excluent pas mutuellement, sont combinées selon toutes les possibilités d'association pour aboutir à différents exemples de réalisation de l'invention.

L'invention et ses différentes applications seront mieux comprises à la lecture de la description qui suit et à l'examen des figures qui l'accompagnent.

Celles-ci ne sont présentées qu'à titre indicatif et nullement limitatif de l'invention. Les figures montrent :
- à la figure1 , une représentation d'une vue éclatée d'un tableau de commandes selon l'invention ;
- à la figure 2, une représentation d'un premier exemple d'un tableau de commandes selon l'invention ;
- à la figure 3, une représentation d'un deuxième exemple d'un tableau de commandes selon l'invention;
- à la figure 4, une représentation d'un d'un tableau de commandes selon l'invention en vue de dessus.

Les différents éléments apparaissant sur différentes figures auront, sauf précision contraire, conservés les mêmes références.

Il existe de nombreux équipements susceptibles d'être présents sur une planche de bord; à titre d'exemple uniquement, dans les figures suivantes, un tableau de commande sera décrit.

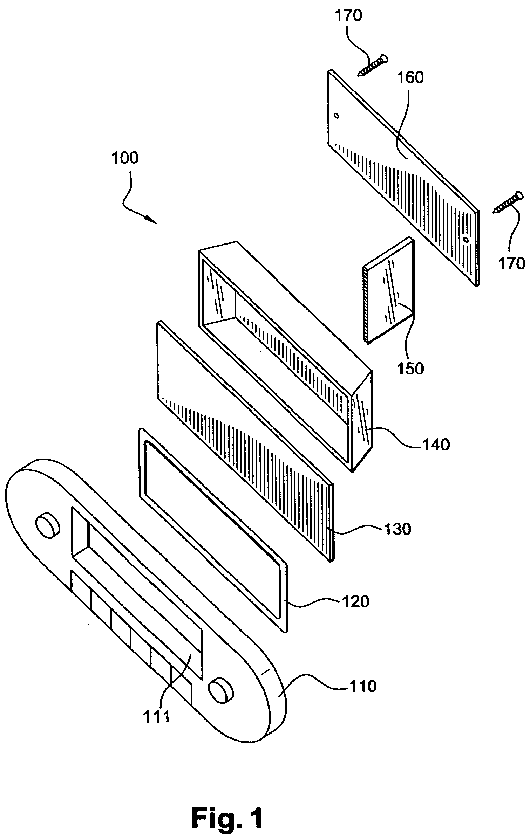

La figure 1 représente une vue éclatée d'un tableau de commandes 100 selon l'invention.

Le tableau de commandes 100 comporte plusieurs éléments, notamment des éléments suivants :
- une façade 110 ;
- un joint 120 ;
- un écran 130 ;
- une boîte à lumière 140 ;
- un connecteur élastomère zébra 150 ;
- un circuit imprimé 160 ;
- et des moyens de fixation 170.

La façade 110 est, dans cette description, une partie fixe sur laquelle se reposent tous les éléments dudit tableau de commandes 100. De plus, la façade 110 comporte une ouverture 111 par laquelle seront visibles les informations affichées sur l'écran 130.

Le joint 120 est situé entre la façade 110 et l'écran 130. Le joint 120 est réalisé dans un matériau souple, notamment un matériau élastomère et plus précisément un élastomère en silicone. Les agents chimiques présents dans les produits de nettoyage sont néfastes pour certains matériaux souples. Le silicone est un matériau neutre qui ne peut donc pas être endommagé par les agents chimiques. Sur cette figure, le joint 120 est de forme rectangulaire et de taille légèrement supérieure à la taille de la périphérie de l'ouverture 111 afin de ne pas être visible par l'utilisateur.

L'écran 130 est ici un écran de type LCD ; il est placé devant l'ouverture 111 de la façade 110. L'écran 130 affiche les informations visibles par l'utilisateur.

La boîte à lumière 140 est une boîte blanche permettant de faire réfléchir et diffuser de façon homogène la lumière diffusée par des lampes ou des diodes Led fixées sur le circuit imprimé 160.

Le circuit zébra 150 assure une connexion entre l'écran 130 et le circuit imprimé 160. Le circuit zébra 150 est réalisé dans un matériau souple et il est composé de fines lamelles permettant les connexions.

Les moyens de fixation 170 dans cet exemple de réalisation, sont constitués par des vis traversant le circuit imprimé 160, et venant se visser dans la façade 110, mais peuvent être réalisés de toute autre façon.

Les différents éléments du tableau de commande 100, décrits précédemment, sont en appui les uns sur les autres, permettant ainsi d'écraser le joint 120 et d'assurer une étanchéité pour ne pas laisser passer l'air et/ou les agents chimiques.

Dans un autre mode de réalisation, le moyen de fixation est un capot arrière de la façade, ledit capot maintenant une pression sur tous les éléments du tableau de commandes.

Dans un exemple de réalisation particulier, la façade 110 peut faire partie intégrante de la planche de bord du véhicule, en ne constituant pas une pièce distincte de celui-ci.

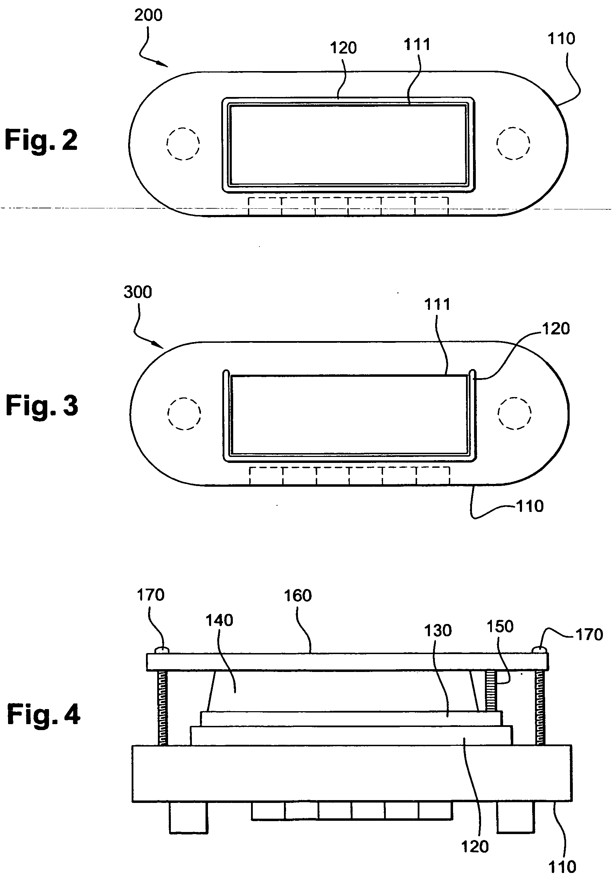

La figure 2 représente un premier tableau de commandes 200 selon l'invention en vue de derrière, la vue avant correspondant à la partie visible par un utilisateur.

Le dispositif tableau de commandes 200 comporte les différents éléments décrits en référence à la figure 1.

Dans cet exemple, le joint 120, de forme rectangulaire, est placé sur la totalité de la périphérie de l'ouverture 111. D'une manière générale, on désigne par la périphérie de l'ouverture 111 le contour de ladite ouverture au niveau duquel le joint 120 peut s'appuyer.

Le joint 120 est directement formé et collé soit sur la façade 110 soit sur l'écran 130, soit sur la façade 110 et sur l'écran 130.

Par exemple dans une gorge pratiquée à l'arrière de la façade , on peut venir déposer par une buse d'extrusion programmée sur le pourtour, un matériau pâteux , durcissable ou non, collant ou non , qui fera l'étanchéité avec la surface du LCD

Sinon, on peut encore prévoir un moyen de surmoulage qui emprisonne la façade aménagée d'une gorge préformée par l'opération d'injection ou la séquence précédente, et y faire injecter la deuxième matière liquide ou pâteuse qui durcissera dans le procédé pour constituer le joint ou la lèvre d'étanchéité.

Dans d'autres modes de réalisation le joint est préalablement fabriqué puis, est soit :
- collé sur l'écran ;
- collé sur la façade ;
- collé sur la façade et l'écran ;
- disposé entre la façade et l'écran ; il est alors maintenu avec la pression des moyens de fixation ;
- disposé dans une rainure préalablement ménagée sur une partie non visible par l'utilisateur de la façade ;

La figure 3 représente un deuxième tableau de commande 300 selon l'invention en vue de derrière

Les différents éléments composant le tableau de commande 300 restent inchangés par rapport au premier exemple décrit.

Dans ce deuxième mode de réalisation, la différence essentielle avec le premier exemple de réalisation décrit réside dans le fait que le joint 120 est placé sur une partie de la périphérie de l'ouverture 111 de la façade 110. Le joint 120 est placé sur les côtés et sur la partie basse de ladite ouverture 111 ; il a ainsi une forme en "U".

Dans ce mode de réalisation, la protection des composants électroniques est assurée car la zone critique se trouve ici aux niveau des connections ou des touches de commandes représentées en pointillé en bas de la figure 3. D'une part, les produits nettoyants ont toujours tendance à descendre vers le bas et sont bloqués par le joint et d'autre part, le joint se trouvant à coté des touches de commande peut bloquer les décharges électrostatique lors de l'approche du doigt de l'utilisateur. Cet exemple montre qu'il n'est pas nécessaire de placer le joint sur tout le pourtour de l'écran mais qu'il peut être placé uniquement aux endroits nécessaires pour garantir une bonne protection des composants électroniques.

La figure 4 représente le tableau de commande 200 selon l'invention en vue de dessus.

Les éléments présents à la figure 4 sont représentés tels qu'ils vont être assemblés, c'est-à-dire avant que les vis 170 ne soient vissées.

## Revendications

1. Tableau de commande de véhicule automobile comportant une façade dans laquelle est réalisée une ouverture (111) au niveau de laquelle est disposé un écran (130) d'affichage **caractérisé en ce qu'**un joint (120) est disposé au niveau d'au moins une partie de la périphérie de l'ouverture (111), ledit joint étant écrasé pour ne pas laisser passer l'air et pour protéger les composants électroniques situés derrière la façade contre l'intrusion de fluides et de décharges électrostatiques et **en ce que** le joint est directement porté par la façade et/ou l'écran.

2. Tableau de commande (100) selon la revendication 1, **caractérisé en ce que** le joint (120) est disposé sur la totalité de la périphérie de l'ouverture (111).

3. Tableau de commande (100) selon l'une quelconque des revendications 1 à 2, **caractérisé en ce que** le joint (120) est collé sur l'écran (130).

4. Tableau de commande (100) selon l'une quelconque des revendications 1 à 3, **caractérisé en ce que** le joint (120) est collé sur la périphérie de l'ouverture (111).

5. Tableau de commande (100) selon l'une quelconque des revendications 1 à 4, **caractérisé en ce que** le joint (120) est maintenu par une pression exercée sur une face arrière de l'écran (130).

6. Tableau de commande (100) selon l'une quelconque des revendications 1 à 5, **caractérisé en ce que** le joint (120) est disposé dans une rainure aménagée au niveau de la périphérie de l'ouverture (111).

7. Tableau de commande (100) selon la revendication précédente **caractérisé en ce que** le joint (120) est disposé par extrusion dans la rainure aménagée au niveau de la périphérie de l'ouverture (111).

8. Tableau de commande (100) selon l'une quelconque des revendications 1 à 5, **caractérisé en ce que** le joint (120) est disposé par surmoulage au niveau de la périphérie de l'ouverture (111).

9. Tableau de commande (100) selon l'une quelconque des revendications 1 à 6, **caractérisé en ce que** la pression exercée sur le joint (120) est réalisée par des moyens de fixation (170).

10. Tableau de commande (100) selon l'une quelconque des revendications 1 à 7, **caractérisé en ce que** l'écran (130) est un écran de type LCD.

11. Tableau de commande (100) selon l'une quelconque des revendications 1 à 10, **caractérisé en ce que** le joint (120) est réalisé dans un matériau souple.

12. Tableau de commande (100) selon la revendication précédente, **caractérisé en ce que** le matériau souple est un un élastomère en silicone ou une mousse cellulaire en matériau plastique ou caoutchouteux.

## Patentansprüche

1. Armaturenbrett eines Kraftfahrzeugs, umfassend eine Frontplatte, in der eine Öffnung (111) vorgesehen ist, in deren Bereich ein Anzeigebildschirm (130) angeordnet ist, **dadurch gekennzeichnet, dass** eine Dichtung (120) im Bereich mindestens eines Teils der Peripherie der Öffnung (111) angeordnet ist, wobei die Dichtung zusammengedrückt wird, um die Luft nicht durchzulassen und die elektronischen Komponenten, die sich hinter der Frontplatte befinden, vor dem Eindringen von Fluiden und elektrostatischen Entladungen zu schützen, und dass die Dichtung direkt von der Frontplatte und/oder dem Bildschirm getragen wird.

2. Armaturenbrett (100) nach Anspruch 1, **dadurch gekennzeichnet, dass** die Dichtung (120) auf der gesamten Peripherie der Öffnung (111) angeordnet ist.

3. Armaturenbrett (100) nach einem der Ansprüche 1 bis 2, **dadurch gekennzeichnet, dass** die Dichtung (120) auf den Bildschirm (130) geklebt ist.

4. Armaturenbrett (100) nach einem der Ansprüche 1 bis 3, **dadurch gekennzeichnet, dass** die Dichtung (120) auf die Peripherie der Öffnung (111) geklebt ist.

5. Armaturenbrett (100) nach einem der Ansprüche 1 bis 4, **dadurch gekennzeichnet, dass** die Dichtung (120) durch einen auf eine Rückseite des Bildschirms (130) ausgeübten Druck gehalten wird.

6. Armaturenbrett (100) nach einem der Ansprüche 1 bis 5, **dadurch gekennzeichnet, dass** die Dichtung (120) in einer Nut angeordnet ist, die im Bereich der Peripherie der Öffnung (111) vorgesehen ist.

7. Armaturenbrett (100) nach dem vorhergehenden Anspruch, **dadurch gekennzeichnet, dass** die Dichtung (120) durch Extrusion in der Nut, die im Bereich der Peripherie der Öffnung (111) vorgesehen ist, angeordnet wird.

8. Armaturenbrett (100) nach einem der Ansprüche 1 bis 5, **dadurch gekennzeichnet, dass** die Dichtung (120) durch Überformen im Bereich der Peripherie der Öffnung (111) angeordnet wird.

9. Armaturenbrett (100) nach einem der Ansprüche 1 bis 6, **dadurch gekennzeichnet, dass** der auf die Dichtung (120) ausgeübte Druck durch Befestigungsmittel (170) verwirklicht wird.

10. Armaturenbrett (100) nach einem der Ansprüche 1 bis 7, **dadurch gekennzeichnet, dass** der Bildschirm (130) ein Bildschirm vom Typ LCD ist.

11. Armaturenbrett (100) nach einem der Ansprüche 1 bis 10, **dadurch gekennzeichnet, dass** die Dichtung (120) aus einem flexiblen Material hergestellt ist.

12. Armaturenbrett (100) nach dem vorhergehenden Anspruch, **dadurch gekennzeichnet, dass** das flexible Material ein Elastomer aus Silikon oder ein Zellschaum aus Kunststoff oder Kautschuk ist.

## Claims

1. Control panel for an automobile comprising a front panel in which an opening (111) is produced in which is arranged a display screen (130), **characterized in that** a seal (120) is arranged on at least a portion of the periphery of the opening (111), said seal being crushed so as not to allow air to pass and so as to protect the electronic components located behind the front panel against the ingress of fluids and electrostatic discharges and **in that** the seal is borne directly by the front panel and/or the screen.

2. Control panel (100) according to Claim 1, **characterized in that** the seal (120) is arranged over all the periphery of the opening (111).

3. Control panel (100) according to either one of Claims 1 or 2, **characterized in that** the seal (120) is glued onto the screen (130).

4. Control panel (100) according to any one of Claims 1 to 3, **characterized in that** the seal (120) is glued onto the periphery of the opening (111).

5. Control panel (100) according to any one of Claims 1 to 4, **characterized in that** the seal (120) is held by a pressure exerted on a rear face of the screen (130).

6. Control panel (100) according to any one of Claims 1 to 5, **characterized in that** the seal (120) is arranged in a groove formed on the periphery of the opening (111).

7. Control panel (100) according to the preceding claim, **characterized in that** the seal (120) is arranged by extrusion in the groove formed on the periphery of the opening (111).

8. Control panel (100) according to any one of Claims 1 to 5, **characterized in that** the seal (120) is arranged by overmolding on the periphery of the opening (111).

9. Control panel (100) according to any one of Claims 1 to 6, **characterized in that** the pressure exerted on the seal (120) is produced by fastening means (170).

10. Control panel (100) according to any one of Claims 1 to 7, **characterized in that** the screen (130) is an LCD-type screen.

11. Control panel (100) according to any one of Claims 1 to 10, **characterized in that** the seal (120) is produced in a flexible material.

12. Control panel (100) according to the preceding claim, **characterized in that** the flexible material is a silicone elastomer or a cellular foam made of plastic or rubber material.
